# EUROPÄISCHE PATENTSCHRIFT

(11) **EP 1 389 317 B1**
(45) Veröffentlichungstag und Bekanntmachung des Hinweises auf die Patenterteilung: **05.10.2011**
(21) Anmeldenummer: 00940336.1
(22) Anmeldetag: 07.06.2000
(51) Int. Cl.: G06F 17/30

(54) **TEXTSUCHMASCHINE**
SEARCH MACHINE
APPAREIL DE RECHERCHE

(30) Priorität: 09.06.1999 DE 19926195; 13.12.1999 DE 19960081
(43) Veröffentlichungstag der Anmeldung: 18.02.2004
(73) Patentinhaber: Berberich, Olaf, 47798 Krefeld (DE)
(72) Erfinder: Berberich, Olaf, 47798 Krefeld (DE)
(74) Vertreter: Braun-Dullaeus, Karl-Ulrich
(86) Internationale Anmeldenummer: PCT/EP2000/005225
(87) Internationale Veröffentlichungsnummer: WO 2000/077680

(56) Entgegenhaltungen:
- WO-A-98/37474
- WO-A-98/58344
- WO-A-99/19817
- "INTERNET SEARCH TECHNIQUE USING UNIVERSAL PRODUCT CODES" IBM TECHNICAL DISCLOSURE BULLETIN, IBM CORP. NEW YORK, US, Bd. 41, Nr. 1, 1998, Seite 279 XP000772107 ISSN: 0018-8689

## Beschreibung

Die Erfindung betrifft ein Verfahren zur Herstellung einer Verbindung zwischen einem aus kleinsten sprachlichen Zeichen (Monemen) bestehenden Suchwort und einer Datei, wobei in einem ersten Verfahrensschritt das Suchwort über eine Eingabeeinheit, insbesondere über die Tastatur eines Computers, vorgegeben wird. Die erfindung betrifft ebenso ein System zur Durchführung des Verfahrens.

Derartige Verfahren, bei denen der Benutzer mittels eines von ihm vorgebbaren und aus Monemen bestehenden Suchwortes oder Begriffes in einer oder mehreren meist in Datenbanken befindlichen Dateien nach Informationen suchen kann, sind in einer Vielzahl von Ausführungsformen bekannt. Diese Verfahren werden vorzugsweise von Computerprogrammen realisiert, die mit entsprechenden die Suche durchführenden Suchalgorithmen ausgestattel sind und die von den Betreibern der Datenbanken oder von unabhängigen Anbietern zur Verfügung gestellt werden. Derartige Suchprogramme werden auch als sogenannte Suchmaschinen in großer Vielzahl für die Suche von Waren und/oder Dienstleistungen im Internet angeboten.

Alle bislang bekannten Suchprogramme funktionieren nach demselben Prinzip. Danach ist die Menge der für die Suche zur Verfügung stehenden Daten systematisch, beispielsweise nach dem Alphabet in Form einer Indexdatei, geordnet. Durch diese Ordnung ist es einfach, an der richtigen Stelle ähnlich wie in einem Telephonbuch nach dem gewünschten Begriff zu suchen.

Nachteilig an allen bekannten Suchprogrammen ist, daß sie stur nach dem vorgegebenen Begriff suchen und möglche Abwandlungen des konkreten Begriffes lediglich im Rahmen vorgebbarer Platzhalter (Joker) zulassen. So finden sie ausschließlich ein Abbild des vorgegebenen Begriffes oder des vorgegebenen Bestandteiles. Den bekannten Programmen ist es beilspielsweise nicht möglich, den Plural eines Suchwortes zu finden, wenn nur der Singular vorgegeben ist. Insbesondere ist es nicht möglich, mit falsch vorgegebenen wie beispielsweise versehentlich falsch geschriebenen Begriffen zu vernünftigen Ergebnissen zu kommen.

Aus der WO 98/37474 A ist ein Verfahren nach dem Oberbegriff von Anspruch 1 bekannt. Nach WO 98/37474 A werden Sätze ("keynotes") eingegeben, um aus diesen Sätzen einzelne Wörter ("keywords") herauszusuchen. Dabei würde die offenbarte Funktion ein Suchwort nicht erkennen, wenn es an einer den Sinn nicht beeinflussenden Stelle falsch geschrieben wäre.

Aufgabe der Erfindung ist es daher, ein Verfahren zu schaffen, das bei vorgegebenem Suchwort eine schnelle und erfolgreiche Suche nach den mit dem Suchwort in Verbindung stehenden Daten ermöglicht, wobei das Verfahren tolerant gegenüber möglichen Abwandlungen des Suchbegriffes ist. Aufgabe ist es ebenso ein System zur Durchführung des Verfahrens zu schaffen.

Diese Aufgaben werden durch das Verfahren nach Anspruch 1 und das System nach Anspruch 8 gelöst.

Der wesentliche Vorteil des erfindungsgemäßen Verfahrens liegt darin, daß des Suchwort auf seine Bedeutung hin untersucht wird und die der Bedeutung oder den Sinngehalten zugeordneten Daten bei der Suche ermittelt werden. Dabei sind sinntragende Findbegriffe als sogenannte Finder in einer Finderdatei aufgelislet. Diese Finder sind Morpheme als kleinste sinntragende Einheiten insbesondere der deutschen Sprache.

Das Verfahren macht es sich dabei zunutze, daß sich die Anzahl dieser Morpheme im Verhältnis zu den aus ihnen zusammensetzbaren Worten in einem überschaubaren Rahmen hält.

Es ist vorteilhaft, neben den Morphemen eigens definierte Wortbestandteile (Grundworte) als weiteren Einheiten in die Finderdatei aufzunehmen, um die Fehlerquote bei der Suche zu verringern. Diese Grundworte können aus einem Morphem, wie beispielsweise "bord" und einem Zusatz wie z.B. "ell" bestehen, wobei das Morphem, in diesem Falle "bord", zu einer nicht gewünschten Warenklasse, beispielsweise zu "Bordschuhen", führt, obwohl der Benutzer in diesem Falle nach einem Bordell gesucht hat. Um solche Verwirrungen zu vermeiden, ist die Aufnahme derartigen Grundworten vorteilhaft.

Generell wird über das erfindungsgemäße Verfahren eine physikalische Verbindung, beispielsweise über das Internet, zwischen einem vom Benutzer bedienten Computer und einem Server hergestellt, auf dem für den Benutzer interessante Informationen beispielsweise in einer Infodatei zu finden sind. So wird eine Zuordnung bislang nicht korrelierter Daten geschaffen und die Möglichkeit zur Ausgabe der Informationen eröffnet.

Da sich Finder in der Form von Morphemen, Grundworten und anderen Einheiten wie Funktionsmorphemen mitunter innerhalb des Suchwortes überschneiden (siehe "bord" und "bordell") ist es vorteilhaft, beim Vorliegen von mehreren Findern für denselben Abschnitt der Zeichenkette (hier "bord") die dem längeren Finder (hier "bordell") zugeordnete Datei und/oder den Pointer auf die zugeordnete Datei zu übergeben. In dem Suchwort werden Somit die größten gemeinsamen Teiler ausgewählt, um die Suche einzugrenzen und effizienter zu gestalten. Wenn nach dem Verfahren ein übergeordneter Finder gefunden ist, wird der kürzere untergeordnete Finder vernachlässigt.

Bei der Suche wird das Suchwort einer Komparatoreinheit zugeführt, die das Suchwort auf das Vorhandensein von den in der Finderdatei aufgelisteten und sinntragenden Findern untersucht, wobei beim Auffinden eines Finders eine dem Finder zugeordnete Datei und/oder ein Verweis (Pointer) auf eine dem Finder zugeordnete Datei einer Ausgabeeinheit zur weiteren Verarbeitung übergeben wird.

Neben den genannten Findern, von denen meist mehrere nach festen Regeln gebildete Abwandlungen gleichen Sinngehaltes existieren, werden vorteilhafterweise zudem die erwähnten Funktionsmorpheme berücksichtigt, die den Morphemen vor- und/oder nachgestellt sind und die selber keinen eigenen Sinn tragen. Die Anzahl der Funktionsmorpheme der deutschen Sprache ist sehr begrenzt.

Das erfindungsgemäße Verfahren filtert nunmehr aus dem Suchwort die Finder insbesondere unter Berücksichtigung der Funktionsmorpheme und auch gegebenenfalls nicht identifizierbarer Buchstabenfolgen heraus und übergibt eine diesem Finder zugeordnete Datei bzw. einen Verweis. Das erfindungsgemäße Verfahren läßt sich besonders vorteilhaft mit einem Computer realisieren, wobei die zugehörigen Ein- und Ausgabemöglichkeiten für die Eingabe der Suchworte und die Ausgabe der gewünschten Information genutzt werden kann. Vorteilhafterweise läßt sich das Verfahren für den Betrieb einer Suchmaschine im Internet nutzen.

Besonders vorteilhaft ist, daß die erfindungsgemäße Suche anhand der Finder, insbesondere der Grundworte und Morpheme mit einer großen Wahrscheinlichkeit zu einem schnellen und sinnvollen Ergebnis führt. Dabei zeichnet sich das Vefahren durch seine große Toleranz gegenüber Ungenauigkeiten bei der Eingabe und gegenüber gerade der deutschen Sprache eigenen aus einer Vielzahl von Einzelbegriffen zusammengesetzten Wortkombinationen aus. Wo die Suche nach einem solchen zusammengesetzten Suchwort mit herkömmlichen Verfahren ergebnislos bleiben muß, weil keine exakte Reproduktion des Wortes existiert, da führt die erfindungsgemäße Suche anhand der Finder zu einem vernünfigen Resultat, das dem Suchenden weiterhilft.

Vorteilhafterweise wird die Suche nach Findern in einem Suchwort nicht schon nach dem Auffinden eines einzigen Finders abgebrochen, sondern es wird nach weiteren Findern gesucht. So werden unter Umständen in einem Suchwort mehrere Sinneinheiten entdeckt, so daß ein Verweis auf eine entsprechende Anzahl von Dateien möglich ist. Der Inhalt der gefundenen Dateien kann dann als Menge behandelt und mit Hilfe der bekannten Boolschen Verknüpfungen verarbeitet werden. Beim Auffinden eines Funktionsmorphems kann in einer vorteilhaften Ausführungsform des Verfahrens auf die dem zugehörigen Morphem zugeordnete Datei verwiesen werden.

Vorteilhafterweise sind in der Finderdatei eine große Anzahl von Findern beispielsweise in alphabetischer Ordnung zusammengestellt. Eine solche Liste braucht nur einmal erstellt werden und läßt sich dann für verschiedene Anwendungen einsetzen. Je nach Bedarf können auch mehrere Listen erstellt werden, wobei eine jede Liste einem bestimmten Sachgebiet zugeordnet werden kann. Es ist dabei vorteilhaft, jedem Morphem innerhalb einer solchen Liste eine Adresse in der Art eines Pointes beizuordnen, die auf eine dem Finder zugeordnete Datei verweist. Auch die Funktionsmorpheme können in einer oder mehreren als Listen gestalteten Dateien zusammengestellt sein.

Besonders vorteilhaft läßt sich das erfindungsgemäße Verfahren bei der Suche in Datenbanken anwenden, in denen Waren oder Dienstleistungen (im folgenden vereinfachend als Waren bezeichnet) mehrerer Anbieter beispielsweise mehrerer Einzelhändler einer Stadt zusammengestellt sind. Bei der Suche bekommt der Benutzer nach der Eingabe seines Suchwortes die entsprechend dem Sinngehalt des Suchwortes ermittelten Waren mit den nötigen Informationen wie Preis, Anbieter und dergleichen angezeigt. Um diese Suche zu vereinfachen und hinsichtlich ihres Ergebnisses zu optimieren ist es vorteilhaft, die dem Finder zugeordnete Datei als Kategorie auszubilden, wobei diese Kategorie den Sinngehalt des Morphems repräsentiert. So könnte beispielsweise dem Morphem "Jugend" die Kategorie "Alter 10-30 Jahre" eindeutig zugeordnet werden. Zudem kann es vorteilhaft sein, wenn eine Ware oder Dienstleistung direkt oder mit ihrem gattugsbildenden Oberbegriff ihre eigene Kategorie bildet.

Um die Suche innerhalb der die Waren enthaltenden Datenbank zu optimieren ist es vorteilhaft, jede Kategorie einer übergeordneten Hauptgruppe zuzuordnen. Somit kann beispielsweise die Kategorie "Alter 10-30 Jahre" den Inhalt einer Hauptgruppe "Altersgruppe" bilden, wobei diese Hauptgruppe auch andere Kategorien wie "Alter 0-10 Jahre" als Inhalt haben kann. Die Kategorie "Alter 0-10 Jahre" könnte außerdem den Morphemen "Kind", "Klein" und "Spiel" zugeordnet sein.

Die folgenden Hauptgruppen haben sich als besonders effiziente Möglichkeit der Einteilung erwiesen, weil sich im Bereich der Waren und Dienstleistungen ein Großteil aller denkbaren Kategorien und damit die dazugehörigen Morpheme in eine dieser Hauptgruppen einteilen lassen. Bei diesen Hauptgruppen handelt es sich um Altersgruppen potentieller Kunden, um Zielgruppen für Waren oder Dienstleistungen und um Produktgruppen von Waren. Die Einteilung nach diesen Hauptgruppen ist vorteilhaft, da sie eine Systematik für die Erstellung einer übergeordneten Datei (Leistungsdatei) bildet, in der sämtliche Waren und Dienstleistungen gesammelt sind.

Bei der Erstellung dieser Leistungsdatei werden die Waren eingegeben, wobei jeder Ware ein als Eigenschaftsdatei bezeichneter Datensatz zugeordnet ist. Diese Eigenschaftsdatei weist eine der Anzahl der Hauptgruppen entsprechende Anzahl von Speicherplätzen auf, wobei in einem oder mehreren dieser Speicherplätze eine der entsprechenden Hauptgruppe zugeordnete Kategorie eingebbar ist. So ist der Anbieter der Ware gezwungen, die Ware in einer für die Suche nach Findern geeigneten Weise zu kategorisieren. Die Leistungsdatei besteht somit bildlich gesprochen aus in Zeilen untereinander angeordneten Waren, wobei jeder Ware eine der Anzahl der Hauptgruppen entsprechende Anzahl von Spalten angefügt sind, wobei die Spaltenplätze mit einer der Hauptgruppe zuzurechnenden Kategorie belegt sind.

Bei Vorhandensein einer solchen Leistungsdatei ist es mittels der erfindungsgemäßen auf Finder ausgerichteten Suche einfach, in einem Verfahrensschritt die den Findern zugeordneten Kategorien aneinanderzufügen und die so erstellte und dem Suchwort zugeordnete Summendatei mit der Struktur einer Eigenschaftsdatei innerhalb der Leistungsdatei zu suchen. Wenn eine Eigenschaftsdatei mit dem Inhalt der Summendatei gefunden wurde, können dem Benutzer in einem letzten Verfahrensschritt die Waren und/oder Dienstleistungen ausgegeben werden, deren Eigenschaftsdateien inhaltlich mit der Summendatei übereinstimmen.

Besonders vorteilhaft ist es, wenn der Benutzer, in diesem Falle der Anbieter sich zur Beschickung der Leistungsdatei einer Eingabemaske bedienen kann, über die er auf einfach und komfortable Weise vermittels eines nicht standardisierten Eingabetextes der Leistungsdatei die von ihm angebotenen Artikel als Waren zuführen kann. Dazu gibt er über die Maske einen speziellen Artikel (z.B. VW-Golf) mit einer entsprechenden Artikelbeschreibung (sportliches Fahrzeug) ein. Die Artikelbeschreibung wird dann auf das Vorhandensein von Findern untersucht ("sport", "fahr") und dem Benutzer die den Findern zugeordneten Kategorien (z.B. "Tuningwerkstätten" und "Autovermietungen") vorgeschlagen. Besonders vorteilhaft läßt sich das erfindungsgemäße Verfahren im "cross-selling" einsetzen. Diese Art des Verkaufs ist im Zusammenhang mit elektronischen Commerce (E-Commerce) Systemen entstanden und bezeichnet das Zuordnen von bestimmten Waren zu anderen Waren, um dem Kunden beim Aussuchen einer Ware eine passende Ergänzungsware zu bieten. Das erindungsgemäße Verfahren läßt sich dabei besonders gut in Datenbanken einsetzen, welche das gesamte Dienstleistungs- und Warenangebot einer Stadt erfassen. Dadurch, daß es nur eine begrenzte Anzahl von sinnhaften Kategorien gibt, können bestimmte Kategorien (z.B. ALTER 0-30 JAHRE und SPORT) miteinander verknüpft werden. Dabei ist es besonders vorteilhaft, dem Benutzer eine assoziative Suche zu ermöglichen, so daß dieser die Suche im Internet als Bummel durch eine Stadt empfindet und beispielsweise im Sportgeschäft, das für die junge Zielgruppe optimal ausgestattet ist, auch ein Plakat zum Thema "Wandern" findet.

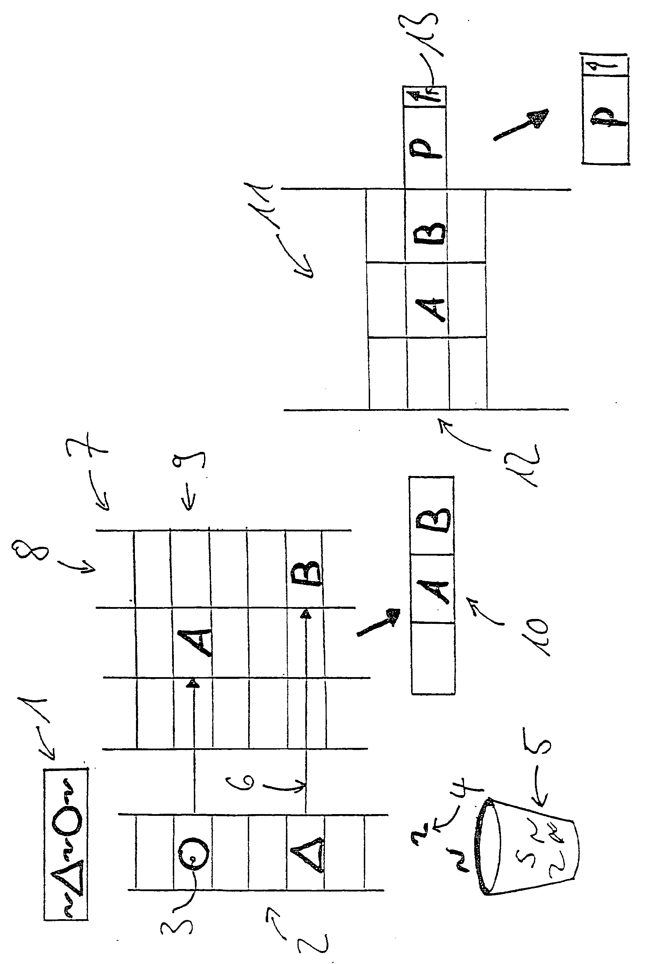

Das erfindungsgemäße Verfahren wird im folgenden anhand des in der Figur gezeigten Diagrammes näher beschrieben.

Die Figur zeigt ein Schema der Suche, wie sie in einem Computer realisierbar ist. Als erster Schritt wird ein Suchwort 1 vorgegeben. Dieses Suchwort wird in einem weiteren Verfahrensschritt einer Datei (Finderdatei oder Morphemliste) 2 gegenübergestellt, in der eine Anzahl von Findern 3 aufgelistet sind, wobei sich die Anzahl auf etwa 10.000 bis 20.000 Morpheme und einigen Hundert Grundworten im Falle der deutschen Sprache belaufen kann. In dem gezeigten Schema sind die Finder 3 mit Symbolen dargestellt. Bei der Gegenüberstellung von Suchwort 1 und Finderdatei 2 werden in dem Suchwort die Finder "Kreis" und "Dreieck" entdeckt. Bei den Bestandteilen "Schlange" 4 handelt es sich um verbindende Funktionsmorpheme, die nach der Analyse als Ballast verworfen werden, wie durch den Papierkorb 5 angedeutet ist. Die Liste der Funktionsmorpheme ist in dieser Darstellung nicht gezeigt. Den aufgelisteten Findern 3 ist ein Verweis (Pointer 6) auf eine andere Datei 7 zugeordnet.

Als Beispiel wäre die Suche nach dem Wort "Turnschuhe" denkbar. Als Morpheme würden dann die beiden Bestandteile "Turn" und "Schuh" gefunden, während "e" als nicht sinnbehaftetes Funktionsmorpheme verworfen würde.

Die andere Datei 7 ist in Spalten 8 aufgeteilt, wobei jede Spalte 8 eine Hauptgruppe repräsentiert. Jede Zeile 9 der Datei ist einem Finder 3 zugeordnet, wobei der Pointer 6 eines jeden Finders 3 auf eine Speicherstelle der Datei 7 zeigt. Der Inhalt einer Speicherstelle repräsentiert eine Kategorie "A" oder "B".

Auf der Suche nach Turnschuhen würde der Pointer von "Schuh" auf die Kategorie "BEKLEIDUNG" zeigen, wobei die Kategorie "BEKLEIDUNG" der Hauptgruppe "Produktgruppe" zugeordnet sein könnte. Der Pointer von "Turn" würde auf die Kategorie "SPORT" zeigen, wobei "SPORT" der Hauptgruppe "Zielgruppe" zuzuschreiben wäre.

In einem weiteren Verfahrensschritt werden die gefundenen Kategorien "A" und "B" zu einer Summendatei 10 vereint, die in ihrem Format den Zeilen einer Leistungsdatei 11 zumindest teilweise entspricht. Die Leistungsdatei 11 enthält alle von den Anbietern vorgegebenen Produkte "P", insbesondere Waren und Dienstleistungen, wobei jedem Produkt "P" in einer Eigenschaftsdatei 12 Informationen zugeordnet sind. Somit bildet eine Eigenschaftsdatei 12 eine Zeile der Leistungsdatei 11. Die Formatierung der Eigenschaftsdatei 12 folgt dabei der Einteilung in Hauptgruppen. Der Inhalt einer Eigenschaftsdatei 12 besteht aus Kategorien "A" und "B". In einem weiteren Schritt wird die Summendatei 10 der Leistungsdatei 11 gegenübergestellt und bei Übereinstimmung von Summendatei 10 und einer Eigenschaftsdatei 12 das Produkt "P" ausgegeben. Am Produkt "P" ist ein Pointer 13 angehängt, der auf den Datensatz mit der vollständigen Information zu dem Produkt verweist. Diese vollständige Information wird dann dem Benutzer ausgegeben.

Im Praxisbeispiel hätten die Anbieter ihre Turnschuhe mit dem Hinweis auf die Zielgruppe "SPORT" und die Produktgruppe "BEKLEIDUNG" versehen und in die Leistungsdatei eingegeben. Ein Vergleich von Summendatei und Leistungsdatei führt dann zu dem Ergebnis "Turnschuhe". Dieses Ergebnis könnte dem Benutzer mit sämtlichen nötigen Informationen ausgegeben werden.

## Patentansprüche

1. Verfahren zur Herstellung einer Verbindung zwischen einem aus kleinsten sprachlichen Zeichen bestehenden Suchwort und einer auf einem Rechner befindlichen Datei, wobei in einem ersten Verfahrensschritt das Suchwort über eine Eingabeeinheit, insbesondere über eine Tastatur, vorgegeben wird,
**dadurch gekennzeichnet,**
**daß** das Suchwort auf seine Bedeutung hin untersucht wird, indem es einer Komparatoreinheit zugeführt wird, die das Suchwort (1) auf das Vorhandensein von in einer Finderdatei aufgelisteten und sinntragenden Findbegriffen, sogenannten "Findern" (3), untersucht, wobei die Finderdatei als Finder Morpheme im Sinne kleinster sinntragender Einheiten einer Sprache enthält und wobei der Bedeutung zugeordnete Daten ermittelt werden, indem beim Auffinden eines Finders (3) eine dem Finder (3) zugeordnete Datei und/oder ein Verweis (6) sogenannte pointer auf eine dem Finder (3) zugeordnete Datei einer Ausgabeeinheit zur weiteren Verarbeitung übergeben wird.

2. Verfahren nach Anspruch 1,
**dadurch gekennzeichnet, daß** die Finderdatei neben den Morphemen auch definierte Grundworte enthält.

3. Verfahren nach Anspruch 1 oder 2,
**dadurch gekennzeichnet, daß** das Suchwort (1) auf das Vorhandensein weiterer Finder (3) untersucht wird, wobei zu jedem gefundenen Finder (3) die diesem Finder (3) zugeordnete Datei (7) direkt oder mittels eines Pointers (6) übergeben wird, wobei insbesondere bei Vorliegen von mehreren Findern für denselben Abschnitt der Zeichenkette die dem längeren Finder zugeordnete Datei und/oder der Pointer auf die zugeordnete Datei übergeben wird.

4. Verfahren nach einem der vorherigen Ansprüche,
**dadurch gekennzeichnet, daß** das Suchwort (1) auf das Vorhandensein von gebundenen Funktionsmorphemen (4) ohne direkten Sinngehalt untersucht wird, wobei ein gefundenes Funktionsmorphem (4) mit dem zugeordneten Morphem (3) verbunden wird und die diesem Morphem (3) zugeordnete Datei (7) direkt oder mittels eines Pointers (6) übergeben wird.

5. Verfahren nach Anspruch 4,
**dadurch gekennzeichnet, daß** jedem Finder (3) der Finderdatei (2) ein Pointer (6) auf die dem Finder (3) zugeordnete Datei (7) beigeordnet ist.

6. Verfahren nach einem der vorherigen Ansprüche,
**dadurch gekennzeichnet, daß** die jedem Finder zugeordnete Datei eine Kategorie (A,B) repräsentiert, wobei insbesondere eine Kategorie (A,B) von einer Warenklasse oder einer Dienstleistungsklasse gebildet wird.

7. Verfahren nach einem der vorherigen Ansprüche,
**gekennzeichnet durch** eine Eingabemaske, über die ein Benutzer vermittels eines Eingabetextes der Leistungsdatei (11) Waren und/oder Dienstleistungen zuführen kann, wobei ein spezieller Artikel mit einer entsprechenden Artikelbeschreibung über die Maske eingegeben wird, wobei die Artikelbeschreibung auf das Vorhandensein von Findern untersucht wird und wobei dem Benutzer Kategorien vorgeschlagen werden, die den Findern zugeordnet sind.

8. System mit Mitteln zur Umsetzung des Verfahrens nach einem der vorherigen Ansprüche umfassend mindestens zwei Computer, wobei über eine Eingabeeinheit des ersten Computers von einem Benutzer ein aus kleinsten sprachlichen Zeichen bestehendes Suchwort vorgebbar ist, wobei sich im Speicher des zweiten Computers eine Infodatei mit für den Benutzer interessanten Daten befindet und wobei die beiden Computer über ein Netz, insbesondere über das Internet, verbunden sind, **gekennzeichnet durch** eine Komparatoreinheit, die auf einem der beiden Computer oder auf einem dritten Computer realisiert ist, wobei die Komparatoreinheit die Bedeutung des Suchwortes ermittelt, indem sie es auf das Vorhandensein von in einer Finderdatei aufgelisteten und sinntragenden Findern (3) untersucht, wobei die Finderdatei als Finder Morpheme im Sinne kleinster sinntragender Einheiten einer Sprache enthält und wobei der Bedeutung des eines Finders (3) dem Finder (3) zugeordnete Information aus der Infodatei und/oder ein Verweis (6) auf dem Finder (3) zugeordnete und in der Infodatei gespeicherte Information einer Ausgabeeinheit zur weiteren Verarbeitung übergeben wird.

9. System nach Anspruch 8,
**dadurch gekennzeichnet, daß** die Infodatei eine Menge von Waren und/oder Dienstleistungen umfaßt.

10. Suchmaschine mit Mitteln für die Suche nach dem Angebot von Waren und Dienstleistungen im Internet unter Anwendung des Verfahrens nach einem der vorherigen Ansprüche, wobei dem Nutzer ein Zugang zu einem Datensatz geschaffen wird.

## Claims

1. A method for establishing a connection between a search word consisting of smallest linguistic characters and a file resident on a computer, wherein in a first procedural step the search word is specified via an input unit, in particular a keyboard,
**characterised in that**
the search word is examined for its meaning by feeding it into a comparator unit which examines the search word (1) for the existence of meaningful finding terms, so-called "finders" (3), listed in a finder file, wherein the finder file contains morphemes in the sense of smallest meaningful units in a language, and wherein data associated with the meaning is ascertained **in that** when a finder (3) is located a file associated with the finder (3) and/or a reference (6), a so-called pointer, to a file associated with the finder (3) is forwarded to an output unit for further processing.

2. Method according to claim 1,
**characterised in that** the finder file, apart from morphemes, also contains basic words.

3. Method according to claim 1 or 2,
**characterised in that** the search word (1) is examined for the existence of further finders (3), wherein for each located finder (3) the file (7) associated with this finder (3) is forwarded directly or by means of a pointer (6), wherein in particular in the case where several finders exist for the same section of the character chain the file associated with the longer finder and/or the pointer to the associated file is forwarded.

4. Method according to one of the preceding claims,
**characterised in that** the search word (1) is examined for the existence of bound functional morphemes (4) without a direct meaning content, wherein a located functional morpheme (4) is connected with the associated morpheme (3) and the file (7) associated with this morpheme (3) is forwarded directly or by means of a pointer (6).

5. Method according to claim 4,
**characterised in that** each finder (3) of the finder file (2) has a pointer (6) pointing to the file (7) associated with the finder (3) attached to it.

6. Method according to one of the preceding claims,
**characterised in that** the file associated with each finder represents a category (A, B), wherein in particular a category (A, B) is formed from a class of goods or a class of services.

7. Method according to one of the preceding claims,
**characterised by** an input mask, via which a user, by means of an input text, can supply to the deliverables file (11) goods and/or services, wherein a special article comprising a corresponding article description is input via the mask, wherein the article description is examined for the existence of finders and wherein categories are suggested to the user, which are associated with the finders.

8. System comprising means for implementing the procedure according to one of the preceding claims comprising at least two computers, wherein a search word consisting of smallest linguistic characters can be specified by a user via an input unit of the first computer, wherein an information file containing data interesting to the user exists in the memory of the second computer, and wherein the two computers are connected via a network, in particular via the internet,
**characterised by** a comparator unit realised on one of the two computers or on a third computer, wherein the comparator unit ascertains the meaning of the search word in that it examines it for the existence of meaningful finders (3) listed in a finder file, wherein the finder file as a finder contains morphemes in the sense of smallest meaningful units of a language, and wherein data associated with the meaning of the search word is ascertained in that, when a finder (3) is located, the information from the information file associated with the finder (3) and/or a reference (6) to information associated with the finder (3) and stored in the information file is forwarded to the output file for further processing.

9. System according to claim 8,
**characterised in that** the information file comprises a quantity of goods and/or services.

10. Search engine with means for searching for the offer of goods and services in the Internet by using the method according to one of the preceding claims, wherein the user is given access to a data record.

## Revendications

1. Procédé pour établir une relation entre un mot de recherche formé des plus petits signes linguistiques et un fichier se trouvant sur un ordinateur, le mot de recherche étant prédéfini dans une première étape de procédé au moyen d'une unité d'entrée, en particulier au moyen d'un clavier,
**caractérisé en ce que**
le mot de recherche est étudié au niveau de sa signification en l'amenant à une unité de comparaison, qui étudie le mot de recherche (1) au niveau de la présence de termes de recherche listés dans un dossier de recherche et ayant un sens, appelés "rechercheurs" (3), le dossier de recherche contenant sous forme de rechercheurs des morphèmes dans le sens de plus petites unités ayant un sens d'une langue et des données attribuées à la signification étant déterminées en remettant, lors de la découverte d'un rechercheur (3), un fichier attribué au rechercheur (3) et/ou une référence (6) appelée indicateur à un fichier attribué au rechercheur (3) étant transmis à une unité de sortie pour le traitement ultérieur.

2. Procédé selon la revendication 1,
**caractérisé en ce que** le dossier de recherche contient, outre les morphèmes, également des mots de base définis.

3. Procédé selon la revendication 1 ou 2,
**caractérisé en ce que** le mot de recherche (1) est étudié au niveau de la présence d'autres rechercheurs (3), le fichier (7) attribué à ce rechercheur (3) étant transmis directement ou au moyen d'un indicateur (6) pour tout rechercheur (3), le fichier attribué au rechercheur plus long et/ou l'indicateur indiquant le fichier attribué étant transmis en particulier en cas de présence de plusieurs rechercheurs pour la même partie de la chaîne de signes.

4. Procédé selon l'une quelconque des revendications précédentes,
**caractérisé en ce que** le mot de recherche (1) est étudié au niveau de la présence de morphèmes de fonction (4) liés sans signification directe, un morphème de fonction (4) trouvé étant lié au morphème (3) associé et le fichier (7) associé à ce morphème (3) étant transmis directement ou au moyen d'un indicateur (6).

5. Procédé selon la revendication 4,
**caractérisé en ce qu'**un indicateur (6) indiquant le fichier (7) associé au rechercheur (3) est associé à tout rechercheur (3) du dossier de recherche (2).

6. Procédé selon l'une quelconque des revendications précédentes,
**caractérisé en ce que** le fichier attribué à chaque rechercheur représente une catégorie (A, B), en particulier une catégorie (A, B) étant formée par une classe de marchandises ou une classe de prestation de service.

7. Procédé selon l'une quelconque des revendications précédentes,
**caractérisé par** un masque d'entrée, par lequel un utilisateur peut amener des marchandises et/ou des prestations de service au moyen d'un texte d'entrée au fichier de prestation (11), un article spécial étant entré avec une description d'article correspondante par le masque, la description d'article étant analysée au niveau de la présence de rechercheurs et des catégories, qui sont attribuées aux rechercheurs, étant proposées à l'utilisateur.

8. Système doté de moyens pour la mise en oeuvre du procédé selon l'une quelconque des revendications précédentes comprenant au moins deux ordinateurs, un mot de recherche constitué des plus petits signes linguistiques pouvant être prédéfini par un utilisateur au moyen d'une unité d'entrée du premier ordinateur, un fichier d'information avec des données intéressantes pour l'utilisateur se trouvant dans la mémoire du second ordinateur et les deux ordinateurs étant reliés par un réseau, en particulier par Internet,
**caractérisé par** une unité de comparaison, qui est réalisée sur l'un des deux ordinateurs ou sur un troisième ordinateur, l'unité de comparaison déterminant la signification du mot de recherche en l'étudiant au niveau de la présence de rechercheurs (3) listés dans un dossier de recherche et ayant un sens, le dossier de recherche contenant en tant que rechercheurs des morphèmes dans le sens de très petites unités ayant un sens d'une langue et des données attribuées à la signification du mot de recherche étant déterminées du fait que, lors de la découverte d'un rechercheur (3), de l'information attribuée au rechercheur (3) provenant du fichier info et/ou une référence (6) à de l'information attribuée au rechercheur (3) et mémorisée dans le fichier info étant transmise(s) à une unité de sortie pour le traitement ultérieur.

9. Système selon la revendication 8,
**caractérisé en ce que** le fichier info contient une quantité de marchandises et/ou de prestations de service.

10. Machine de recherche dotée de moyens pour la recherche de l'offre de marchandises et de prestations de service sur Internet avec l'application du procédé selon l'une quelconque des revendications précédentes, un accès à un ensemble de données étant créé pour l'utilisateur.
